# EUROPEAN PATENT SPECIFICATION

(11) **EP 1 393 497 B1**
(45) Date of publication and mention of the grant of the patent: **02.11.2006**
(21) Application number: 02771851.9
(22) Date of filing: 17.05.2002
(51) Int. Cl.: H04L 12/00

(54) **DUAL MODE SERVICE PLATFORM WITHIN NETWORK COMMUNICATION SYSTEM**
ZWEIFACHMODUS DIENSTPLATTFORM IN NETZWERKKOMMUNIKATIONSSYSTEM
PLATEFORME DE SERVICE DOUBLE MODE DANS UN SYSTEME DE COMMUNICATION PAR RESEAU

(30) Priority: 18.05.2001 US 291825 P; 31.07.2001 US 309213 P
(43) Date of publication of application: 03.03.2004
(73) Proprietor: Bytemobile, Inc., Mountain View, CA 94043 (US)
(72) Inventor: BHARGHAVAN, Vaduvur, San Jose, CA 95120 (US); HAN, Sung-Wook, San Jose, CA 95117 (US)
(74) Representative: Davies, Simon Robert
(86) International application number: PCT/US2002/015839
(87) International publication number: WO 2002/096022

(56) References cited:
- US-A- 5 754 774
- US-A- 6 167 450
- BAKRE A V ET AL: "IMPLEMENTATION AND PERFORMANCE EVALUATION OF INDIRECT TCP" , IEEE TRANSACTIONS ON COMPUTERS, IEEE INC. NEW YORK, US, VOL. 46, NR. 3, PAGE(S) 260-278 XP000685987 ISSN: 0018-9340 abstract; figure 3 page 262, right-hand column, line 26 -page 263, left-hand column, line 30 page 260, right-hand column, line 18 - line 31 page 261, right-hand column, line 46 -page 262, left-hand column, line 10 page 263, right-hand column, line 11 - line 30 page 266, left-hand column, line 22 -right-hand column, line 8
- DOVROLIS C ET AL: "A CASE FOR RELATIVE DIFFERENTIATED SERVICES AND THE PROPORTIONAL DIFFERENTIATION MODEL" IEEE NETWORK, IEEE INC. NEW YORK, US, vol. 13, no. 5, September 1999 (1999-09), pages 26-34, XP000875308 ISSN: 0890-8044

## Description

### BACKGROUND

### 1. Field of Invention

The present invention generally relates to network communication systems, and more particularly, to systems and methods for providing a dual mode service platform within a network communication system.

### 2. Description of Related Art

Modem network communications systems have increasingly employed Internet-based architectures within the network infrastructure. These Internet-based architectures have provided network operators and subscribers significant advantages in terms of connectivity by enabling applications deployed on different physical networks to communicate with one another using a common communications protocol, such as TCP/IP. The recent increase in number and diversity of applications, subscribers and networking environments supported by these architectures, however, has exposed many of the limitations associated with a single, ubiquitous design. Because the Internet was primarily intended to provide a free network in which stationary hosts predominately send unicast, reliable, sequenced, non real-time data streams over relatively high bandwidth communication channels, Internet-based architectures were designed to be robust and minimalistic, with much of the functionality provided by the end hosts. Consequently, the different and potentially incompatible requirements of the increasingly diverse applications, subscribers and networking environments has placed demands on the existing network infrastructure for which the network infrastructure was not originally designed to handle.

These problems have become increasingly apparent as network operators attempt to deploy differentiated services that tailor value-added data processing or performance optimization to particular applications and individual or enterprise subscribers. The problem with deploying these services within the existing network infrastructure is that the network infrastructure was not designed to support a wide variety application-specific and subscriber-specific services as the corresponding data flows through the network. For example, the routers, gateways and other network nodes typically employed within the network infrastructure generally provide passive routing functionalities. As a result, the existing network infrastructure generally lacks the capability to selectively perform application-specific manipulation of data streams corresponding to different applications or different subscribers.

Conventional TCP architectures employed in data communication networks further exacerbate the foregoing problems by failing to take into account the asymmetric uplink and downlink channels typically employed in wireless and other bandwidth constrained networks. For example, conventional TCP flow control mechanisms utilize an acknowledgement-based approach to regulate the number and timing of new packets transmitted over the communication network. In these implementations, a sender maintains a congestion window parameter that specifies the maximum number of unacknowledged packets that may be transmitted to the receiver. As the sender receives acknowledgement signals from the receiver, the congestion control mechanism increases the size of the congestion window (and decreases the number of unacknowledged packets), thereby enabling the transmitter to immediately transmit additional packets to the receiver.

The problem with this approach is that it assumes that the network employs symmetric uplink and downlink communication channels that enable data packets and acknowledgement signals to be equally spaced in time. In communication networks, such as wireless communication networks, that employ asymmetric uplink and downlink channels, the available bandwidth towards the receiver may be significantly higher than the available bandwidth towards the transmitter. As a result, the receiver may be unable to access the uplink channel in order to transmit acknowledgement signals to the sender in a timely manner. This initial delay in the transmission of acknowledgement signals may cause the sender to suspend transmission of additional data packets until additional acknowledgement signals are received, and then transmit a large burst of packets in response to the sender receiving a large group of acknowledgement signals. As a result, these acknowledgement-based approaches may underestimate the available transmission rate on the downlink channel and result in data being transmitted to the receiver in large bursts, thereby causing applications requiring a steady flow of data, such as audio or video, to experience unusually poor performance.

Therefore, in light of the deficiencies of existing approaches, there is a need for improved systems and methods for dual mode service platform within a network communication system, particularly network communication systems having wireless and other bandwidth constrained channels. These systems and methods would preferably operate to provide application specific manipulation of data streams and improve the end-to-end performance of connections between the sender and receiver.

US 6167450 discloses a data communications management system which enables the use of conventional network applications across mobile communications links, addressing the problem that these applications, which are written for fast, reliable and cheap wired connections, are not well adapted for mobile communications. A set of call handler components are provided for each of a plurality of different network communication applications, and a call manager component which intercepts and analyses all communication calls from applications on the local system, and redirects them to the appropriate call handler. The call handler then performs functions transparently impersonating the remote target of the communication, and replaces the initial protocol of the call with a different protocol which is optimised for the particular service.

"Implementation and performance evaluation of indirect TCP" by Bakre and Badrinath, IEEE Transactions on Computers, March 1997, V46/3, pages 260-278, discusses the advent of small portable computers and wireless communications. The paper discusses the performance of I-TCP, an indirect transport layer protocol for mobile wireless environments. Comparison with conventional TCP shows that I-TCP performs significantly better in a wide range of conditions relating to wireless losses and to host mobility.

### SUMMARY OF THE INVENTION

The present invention helps to alleviate many of the foregoing problems by providing systems and methods for providing a dual mode service platform within a network communication system as defined in the appended claims. In one embodiment, a dual mode service platform within a network communication system may be provided by intercepting packets communicated between a client and a server and determining from the packets whether a connection between the client and the server matches a predetermined service criteria. If the connections matches the predetermined service criteria, the connection between the client and the server may be broken to form a first connection between the client and a service application and a second connection between the service application and the server in order to perform application-specific manipulation of data in accordance with a first mode. Otherwise, transmission of packets communicated is regulated between the client and the server in order to process the packets in accordance with a second mode.

### BRIEF DESCRIPTION OF THE DRAWINGS

These and other features and advantages of the present invention will become more apparent to those skilled in the art from the following detailed description in conjunction with the appended drawings in which:
Figures 1A and 1B illustrate exemplary network communication systems in which the principles of the present invention may be advantageously practiced;
Figure 2 illustrates an exemplary service module platform that may be used in accordance with the present invention;
Figures 3 illustrates a functional block diagram of an exemplary system for providing a dual mode service platform in accordance with the present invention;
Figure 4 illustrates a signal flow diagram showing exemplary signals passed between a wireless client, service module and server in a first mode during an exemplary communication session;
Figure 5 illustrates a signal flow diagram showing exemplary signals passed between a wireless client, service module and server in a second mode during an exemplary communication session;
Figures 6A and 6B illustrate exemplary state transitions for SYN_RCV_ and ESTABLISHED_ during connection establishment in the second mode; and
Figure 7A and 7B illustrate exemplary state transitions for CLOSE_WAIT_ and TIME_WAIT_ during connection termination in the second mode.

### DETAILED DESCRIPTION

Embodiments of the present invention provide systems and methods for providing a dual mode service platform within a communications network. The following description is presented to enable a person skilled in the art to make and use the invention. Descriptions of specific embodiments or applications are provided only as examples. Various modifications, substitutions and variations of embodiments will be apparent to those skilled in the art, and the generic principles defined herein may be applied to other embodiments and applications without departing from the scope of the invention. The present invention should therefore not be limited to the described or illustrated embodiments, and should be accorded the widest scope consistent with the principles and features disclosed herein.

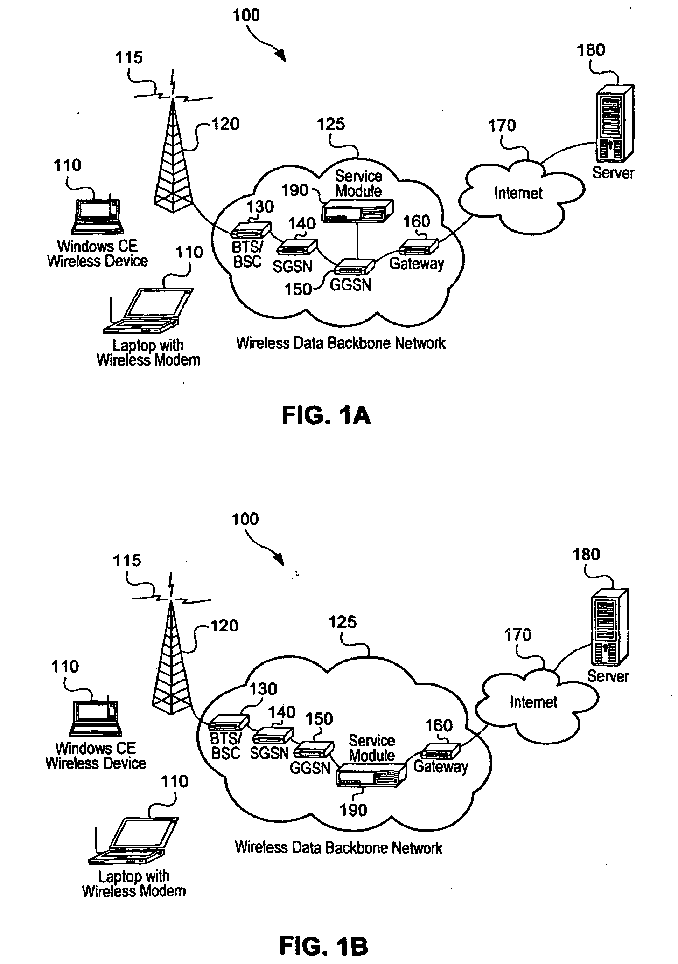

Referring to Figure 1A, an exemplary network communication system in which the principles of the present invention may be advantageously practiced is depicted generally at 100. The exemplary system includes a wireless client 110, such as a personal digital assistant or laptop computer equipped with a wireless modem, that communicates with a server 180 via a wireless backbone network 125 and the Internet 170. In this exemplary system, the wireless backbone network 125 employs a General Packet Radio Service (GPRS) architecture. Accordingly, in order to communicate with the server 180 on the uplink, the wireless client 110 communicates with a base station 120 located within the wireless client's assigned cell. The base station 120 then forwards data and signaling information received from the wireless client 110 through the wireless backbone network 125 via a base transceiver station 130, a serving GPRS support node (SGSN) 140, a gateway GPRS support node (GGSN) 150 and a gateway 160. The gateway 160 acts as an interface between the wireless backbone network 125 and nodes within the Internet 170 and enables information to be transceived between wireless clients 110 coupled to the wireless backbone network 170 and servers 180 coupled to the Internet 170. On the downlink, information is routed through the Internet 170 and wireless backbone network 125 from the server 180 toward the wireless client 110. Once the information is received by the base station 120, the information is transmitted to the wireless client 110 over a wireless channel 115.

Embodiments of the present invention may also incorporate a service module 190 within the network infrastructure between the wireless client 110 and server 180 in order to enable the service module 190 to provide application specific manipulation of data streams and improve the end-to-end performance of connections between the wireless client 110 and the server 180. As illustrated in Figure 1A, for example, the service module 190 may be deployed in an offload configuration that enables the service module 190 to process packets forwarded from a network node, such as a GGSN 150. The configuration of Figure 1 A may be advantageous in that it enables the service module 190 to conform to less stringent reliability requirements, and allows the service module 190 to be periodically taken off-line for hardware or software upgrades or periodic maintenance without disabling links between adjacent nodes. In an alternative embodiment illustrated in Figure 1B, the service module 190 may be arranged in an inline configuration between network nodes such that packets are routed through the service module 190. This inline configuration may also be advantageous in that it may minimize packet processing delays by enabling the service module 190 to process packets without traversing through an intermediate network node. Other embodiments may directly incorporate functionalities of the service module 190 within a network node, such as a GGSN 150, SGSN 140, gateway 160, base transceiver station 130 or the like, in order to enhance the processing capabilities of conventional network nodes or reduce the overhead associated with maintaining separate pieces of equipment.

In operation, the service module 190 may be configured to intercept packets communicated between the wireless client 110 and the server 180 and process the packets in accordance with one of two modes depending on whether the connection matches a predetermined service criteria. This predetermined service criteria may comprise a set of classification rules that mask one or more fields of the packet header to determine whether the connection corresponds to a service application supported by the service module 190, such as email compression, MP3 transcoding, etc. If the connection matches the predetermined service criteria, the service module 190 operates in a first mode by breaking the connection between the wireless client 110 and the server 180 to form a client-side connection between the wireless client 110 and the service application and a server-side connection between the service application and the server 180. This process may involve terminating the connection with the wireless client 110 at the service application to form the client-side connection and opening a separate connection between the service application and the server 180 to form the server-side connection. Because the client-side connection and server-side connection either terminate or originate at the service application, the service application may be configured to monitor data communicated between the wireless client 110 and the server 180 and perform application-specific manipulation of the data stream, such as compressing the data, performing audio or video transcoding, etc. The manipulated data stream may then be forwarded to the originally intended destination by writing the data to the appropriate client-side connection or server-side connection. In this mode of operation, the service module 190 treats each connection as separate connections that are linked together via the service application, thereby allowing the service application to independently transmit and receive data over each connection.

If the connection does not match the predetermined service criteria, the service module 190 operates in a second mode that enhances the end-to-end performance of the connection between the wireless client 110 and the server 180 without breaking end-to-end semantics. For example, the operating system and networking stack of the service module 190 may be configured to independently provide congestion control and flow control over both halves of the end-to-end connection. During initial connection establishment between the wireless client 110 and the server 180, the operating system and networking stack of the service module 190 may be configured to forward connection handshake packets to the originally intended destination without generating any additional packets. Once the connection between the wireless client 110 and the server 180 is established, the operating system and networking stack may regulate both halves of the connection as though they were separate connections. In other words, if the service module 180 intercepts data packets from the server 180, the service module 190 may be configured to send acknowledgement signals back to the server 180 and forward the data packets to the wireless client 110. The service module 110 may then suppress acknowledgement signals intercepted from the wireless client110, or retransmit data packets to the wireless client 110 in the event a time out occurs or duplicate acknowledgements are received from the wireless client 110.

In both the first and the second mode, the service module 190 may be configured to generate outgoing packets that include the source and destination addresses and source and destination ports associated with the wireless client 110 and the server 180. As such, the wireless client 110 and server 180 will process received packets as though they came directly from the other party and will be unaware that the service module 190 has intercepted the packets and (possibly) performed intermediate processing on the transmitted data. Other embodiments may also include a transmit timer within the operating system and networking stack of the service module 190 that regulates timing of data packet transmissions based on a smoothed round trip time and congestion window parameter associated with the uplink and downlink channel, thereby reducing or avoiding the bursty nature of data transmission commonly associated with TCP architectures. The period of the transmit timer for the uplink and downlink channel may also be independently adjusted so as take into consideration the potential differences in available bandwidth on the uplink and downlink channel. By providing two modes of operation and additional mechanisms for enhancing end-to-end performance for both modes, embodiments of the present invention provide a flexible platform for providing value-added services within the network communication system.

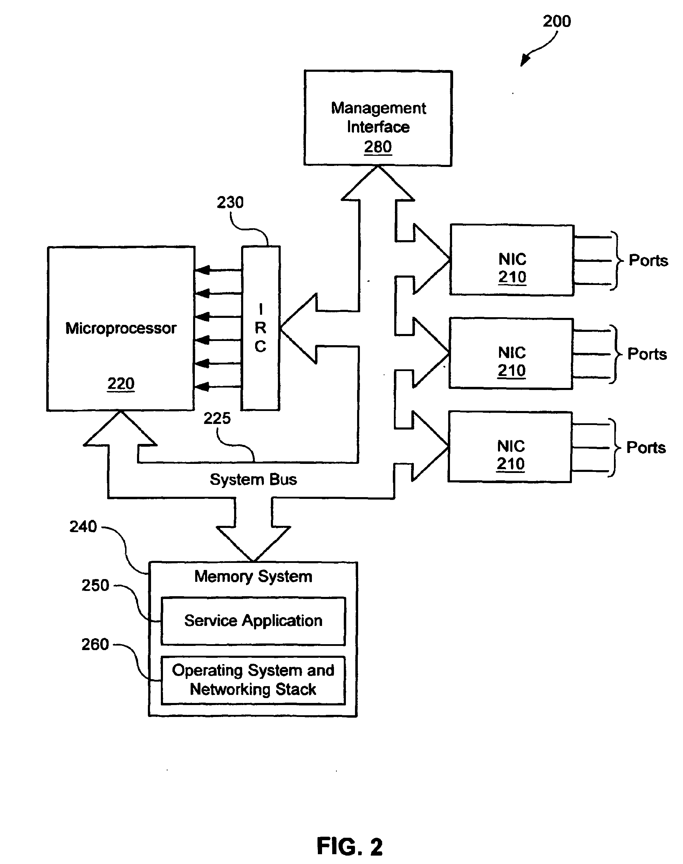

Referring to Figure 2, an exemplary service module platform that may be used in accordance with embodiments of the present invention is depicted generally at 200. As illustrated, the exemplary platform includes one or more network interface cards 210 for interfacing with other nodes within the network, such as a base transceiver station, a SGSN, a GGSN, a gateway or the like. The network interface cards 210 are coupled to a processor 220 via a system bus 225. The processor 220 is also coupled to a memory system 240, such as a random access memory, a hard drive, a floppy disk, a compact disk, or other computer readable medium, which stores an operating system and networking stack 260 and one or more service applications 250. The exemplary platform may also include a management interface 280, such as a keyboard, input device or port for receiving configuration information, that may be used to selectively modify configuration parameters within the operating system and networking stack 260 and service application 250 without requiring the modules to be re-compiled.

In operation, the network interface cards 210 generate a system interrupt to the interrupt controller 230 in response to the network interface card 210 receiving a data packet. The interrupt controller 230 then passes the interrupt to the processor 220 in accordance with the interrupt's assigned priority. Once the interrupt is received by the processor 220, the interrupt causes the processor 220 to execute interrupt handlers incorporated within the operating system and networking stack 260 to process the received packet. These modules may provide operating system functions and other functions associated with the applicable protocol, such as TCP/IP or UDP/IP. Embodiments of the present invention may also incorporate other functionalities within the operating system and networking stack 260, such as functionalities for classifying the connection, breaking the connection between the wireless client and the server, regulating the connection, and generating source addresses for outgoing packets as will be discussed in greater detail below. If the connection matches a predetermined service criteria, the packets may be forwarded to the service application 250 which buffers the received data. The service application 250 may then process the buffered data and forward the processed data to the wireless client via an output port on the network interface cards 210.

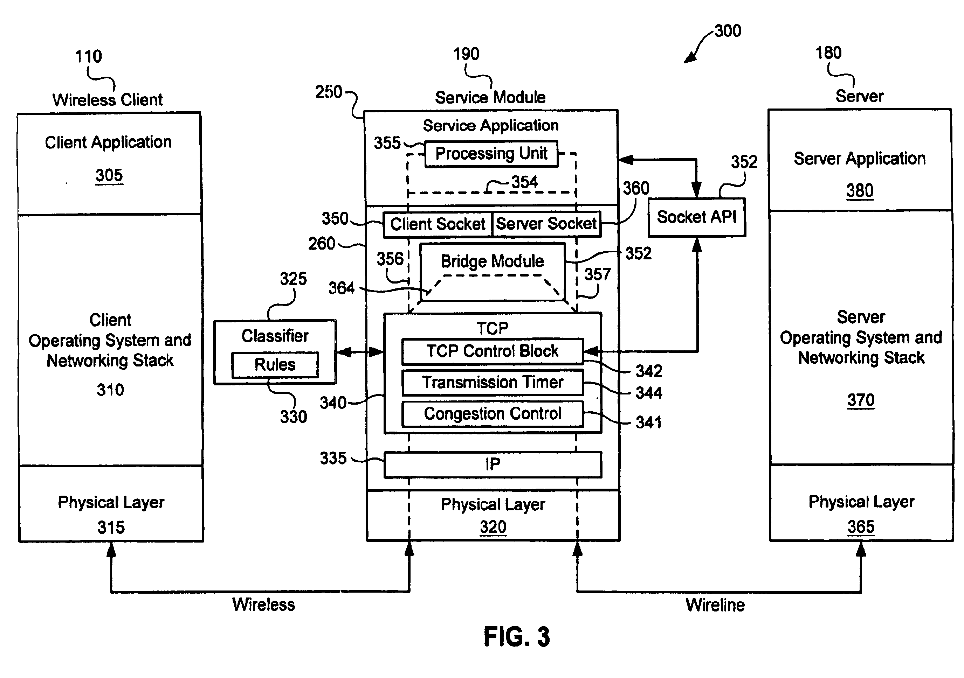

Referring to Figure 3, a functional block diagram of an exemplary system in accordance with an embodiment of the present invention is illustrated generally at 300. The exemplary system includes a service module 190 having a physical layer 320, an operating system and networking stack 260 and a service application 250. As the service module 190 intercepts packets communicated between the wireless client 110 and the server 180, the packets may be directed through the IP layers 335 to the TCP layer 340 of the service module 190. For packets corresponding to connection establishment packets, such as SYN packets used in TCP/IP based protocols, the TCP layer 340 calls the classifier 325 to classify the connection establishment packets in accordance with a set of classification rules 330. These classification rules 330 may comprise one or more masks that are applied to the packet header, such as the source address, destination address, source port, destination port, protocol field and device ID. These classification rules 330 enable the classifier 325 to determine whether the connection corresponds to a service application 250 supported by the service module 190, and therefore, whether to operate in a terminated mode or in a transparent mode. An exemplary classification rule 330 for determining whether a connection corresponds to a email service may mask the source address, source port, destination address, and device ID fields within the packet header and determine whether the protocol field equals TCP and whether the destination port equals either 110 (for POP email protocol) or 143 (for IMAP email protocol).

If the connection establishment packets match a classification rule 330, the classifier 325 instructs the TCP layer 340 to terminate the connection with the source at the service application 250 associated with the classification rule in order to provide application-specific manipulation of the data stream. The TCP layer 340 then modifies a TCP control block 342 to store the original packet header information received from the source, such as the original source and destination addresses and the original source and destination ports, and a redirected destination address and destination port associated with the service application 250. After the TCP layer 340 completes a three-way handshake with the original source, the operating system and networking stack 260 passes data to a client socket 350 and notifies the service application 250 that a new connection has been requested. Once the service application 250 accepts the new connection, the service application 250 calls a socket API 352 that accesses the TCP control block 342 associated with the client socket 350 to retrieve the original packet header information. The service application 250 then opens a server socket 360 using the original destination address and destination port, and calls the socket API 352 to store the original packet header information, along with the redirected address and redirected port associated with the server socket 360, within a TCP control block 342 associated with the server socket 360.

For subsequent incoming packets corresponding to the same connection, the TCP layer 340 uses the TCP control block 342 to redirect incoming packets addressed from the source to the client socket 350 and to redirect incoming packets addressed from the destination to the server socket 360. The service application 250 may then examine data communicated between the source and destination by reading the client socket 350 and the server socket 360, and send data to the source and destination by writing data to the appropriate client socket 350 and server socket 360. For data written to the client socket 350, the data is passed to the TCP layer 340, which accesses the TCP control block 342 associated with the client socket 350 and generates packets having a source address and source port associated with the original destination. For data written to the server socket 360, the TCP layer 340 similarly accesses the TCP control block 342 associated with the server socket 360 and generates packets having a source address and source port associated with the original source. Accordingly, because packets transmitted from the service module 190 include the original source and destination addresses and original source and destination ports, the original source and the original destination are unaware that the service module 190 intercepted the packets and (possibly) performed intermediate processing on the transmitted data.

The foregoing process essentially breaks the end-to-end connection between the wireless client 110 and the server 180 by terminating the connection with the wireless client 110 at the service application 250 to form a client-side connection 356 and opening a separate connection between the transcoder application 250 and the server 180 to form a server-side connection 357. Because the client-side connection 356 and the server-side connection 357 constitute separate and independent channels, the service application 250 may be configured to act like a server with respect to the wireless client 110 and a client with respect to the server 180. For example, the service application 250 may be configured to forward connection-related data, such as user authentication messages, between the client-side connection 356 and the server-side connection 357 by reading the data from the client-side connection 356 and writing the data to the server-side connection 357 and vice versa (as indicated generally by line 354) in order to maintain semantics for the end-to-end connection. Alternatively, if the service application 250 determines that the data stream constitutes transaction (e.g., the data stream was received in response to retrieve command), the service application 250 buffers the data within a processing unit 355. Because these data packets are received through a separate connection, the TCP and IP layers 340, 355 automatically send acknowledgement messages back to the source (typically the server 180) so that the source will continue to send data corresponding to the multimedia information. The processing unit 355 may then perform application specific manipulation of the buffered data (e.g., by compressing or transcoding the data) and reinsert the processed data into the data stream by writing the information to the appropriate client-side connection 356 or server-side connection 357.

During exemplary communication sessions, a client application 305 associated with the wireless client 110 requests a download of data, such as an email message, from a server application 380 associated with the server 180. As packets addressed between the client application 305 and the server application 380 flow through the communication network, the service module 250 intercepts the packets and redirects the packets to the service application 250 via the client-side connection 356 or server-side connection 357. The service application 250 then monitors the state of the communication session in order to detect a data transaction. If the service application 250 determines that the data constitute connection control or application specific commands, the service application 250 simply forwards the data to the intended destination by writing the data to the client-side connection 356 or server-side connection 357. On the other hand, if the service application 250 determines that the data received from the server-side connection 357 constitutes a data transaction, the service application 250 buffers the data within the processing unit 355. Once the data associated with the transaction has been received, the processing unit 355 processes the data (e.g., by compressing the data) and forwards the processed data to the original destination by writing the data to the client-side connection 356 or server-side connection 357. Because the outgoing packets include the original source and destination addresses and the original source and destination ports associated with the end-to-end connection, the physical layer 315 and operating system and networking stack 310 of the wireless client 110 will process received packets as though the packets were transmitted directly from the server 180 and vice versa. As a result, the application specific manipulation performed by the service application 250 process can be performed without requiring modification of the physical layers 315, 365 and operating systems and networking stacks 310, 370 of the wireless client 110 and server 180.

Additional information regarding the functionality, features and operation of a service module deployed between a server and a client to manage TCP data transmissions in a terminated mode is described in U.S. Patent Application No. 10/095,551, filed March 11, 2002, entitled "Service-Based Compression of Content Within A Network Communication System" and in U.S. Patent Application No. 10/126,131, filed April 19, 2002, entitled "Systems and Methods for Providing Differentiated Services within a Network Communication System," which have been assigned of record to the assignee of the present application and are incorporated herein by reference.

In addition to the terminated mode described above, the service module 190 may also be configured to operate in a transparent mode in order to improve the end-to-end performance of connections on which a service application 250 does not perform a service. For example, if the classifier 330 determines that a connection does not match any of the classification rules 330, the classifier 325 may be configured to instruct the TCP layer 340 to mark the connection as transparent (meaning no services are invoked for this connection). In this case, the connection is not terminated at the service application 250 as described above, and instead, the TCP layer 340 forwards data associated with the end-to-end connection through a bridge module 352. The bridge module 352 may include receive and write queues associated a server-end of the connection toward the server 180 and receive and write queues associated with a client-end of the connection toward wireless client 110. If the bridge module 352 receives data from the server 180 in a receive queue associated with the server-end connection, the bridge module 352 may forward the data to the wireless client 110 by writing the data to the write queue associated with the client-end connection. The bridge module 352 may then forward the data from the write queue to the TCP layer 340 for transmission to the wireless client 110. A similar approach may be used to forward to the server 180 data received from the wireless client 110. This interaction between the TCP layer 340 and the bridge module 352 may be repeated for subsequent packets such that packets associated with the end-to-end connection are forwarded through the bridge module 352 (as generally indicated by line 364). Because both the client-end and server-end of the connection pass through the TCP layer 340, the TCP layer 340 may independently regulate both halves of the connection using the transmission timer 344 and congestion control mechanism 341 described below. Furthermore, because the TCP layer 340 may also address outgoing packets using the original source and destination addresses and original source and destination ports, the original source and the original destination are unaware that the service module 190 intercepted the packets and may be regulating data transmission.

The operating system and networking stack 260 of the service module 190 may also include a transmission timer 344 and congestion control mechanism 341 that interact to control the timing of data packet transmissions in both the terminated mode and the transparent mode. In other words, the transmission timer 344 may independently control data packet transmissions on the downlink toward the wireless client 110 by regulating the timing of transmission of the client-side connection (in terminated mode) or client-end connection (in transparent mode). Similarly, a separate transmission timer 344 may independently control data packet transmissions on the uplink toward the server 180 by regulating the timing of transmission of the server-side connection (in terminated mode) or server-end connection (in transparent mode).

The period of the transmission timer 344 may be based on measurements performed by the congestion control mechanism 341. For example, the congestion control mechanism 341 may be configured to maintain a congestion window parameter that determines the maximum number of unacknowledged packets that may send to the receiver. The congestion control mechanism 341 may also measure the round trip time of data packets transmitted to the receiver in order to calculate a smoothed round trip time based on the average and maximum deviation of a plurality of round trip time samples. The period of the transmission timer 344 may then be determined based on the ratio of the smoothed round trip time and the smoothed congestion window. This timer-based approach to flow control, together with the smoothing used to compute the transmission rate, offers a more relevant estimate of congestion within the communication network and may reduce or eliminate the bursty transmission of data commonly associated with conventional TCP architectures. As a result, this aspect of the present invention may enhance the end-to-end performance of the connection, regardless of whether the service module 190 is operating in the terminated mode or transparent mode.

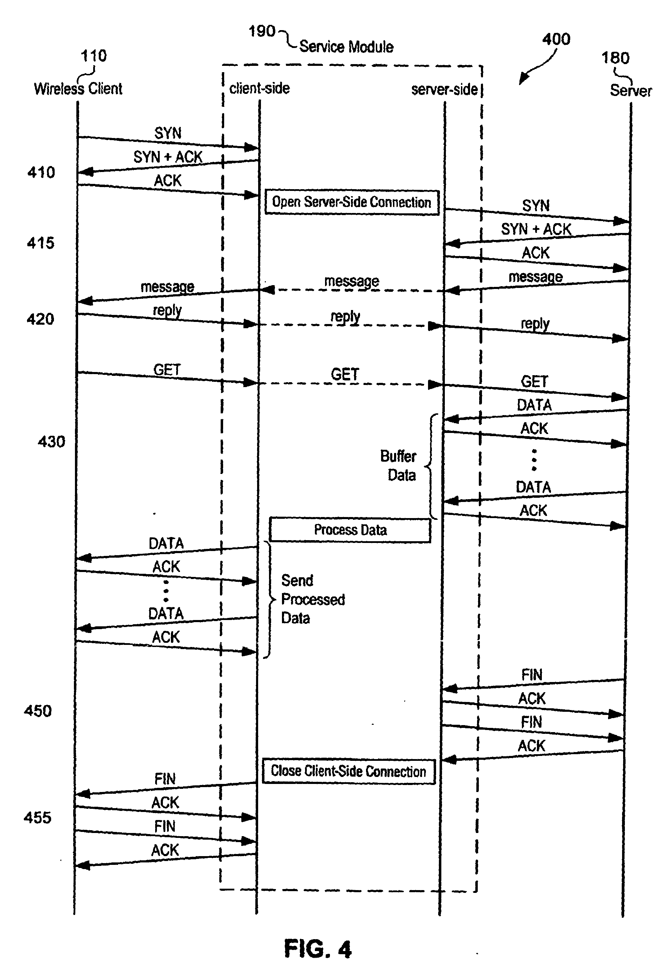

Referring to Figure 4, a signal flow diagram showing exemplary signals passed between a wireless client, service module and server in a terminated mode of operation is illustrated generally at 400. The terminated mode of operation corresponds to the mode in which application-specific manipulation of data streams is performed. As described above with respect to the embodiment of Figure 3, packets communicated between the wireless client 110 and the server 180 may be intercepted by the service module 190 and redirected to a service application in response to the connection matching a classification rule. As a result, the service application may be configured to monitor data communicated between the wireless client 110 and the server 180 and to update the state of the communication session. The service application may then process received data in accordance with the current state of the communication session. For example, the wireless client 110 may initiate an communication session with the server 180 by attempting to engage in a three-way handshake with the server 180 as indicated generally at 410. During this connection establishment state, the service module 190 classifies the connection between the wireless client 110 and the server 180, and terminates the connection with the wireless client 110 at the service application in response to the connection establishment packet (e.g., SYN packet) matching a corresponding classification rule. The operating system and networking stack of the service module 190 then completes the three-way handshake with the wireless client 110. Once the client-side connection is accepted by the service application, the service application opens a separate server-side connection with the server 180 using the original destination address and destination port. The operating system and networking stack of the service module 190 similarly completes a three-way handshake with the server 415 as indicated generally at 415. This process breaks the end-to-end connection between the wireless client 110 and the server 180 to form a client side-connection between the wireless client 110 and the service module 190 and a server-side connection between the service module 190 and the server 180.

Once the service module 190 completes the connection establishment state with the wireless client 110 and the server 180, the communication session may then enter a user authentication or initial setup state as indicated generally at 420. The messages communicated between the wireless client 110 and the server 180 during this state vary depending on the particular application. For email applications, the server 180 may send a greeting packet to the wireless client 110 requesting an appropriate user name and password, and the wireless client 110 responds by sending the requested information to the server 180. For these user authentication messages, the service application maintains end-to-end semantics by forwarding messages between the client-side connection and the server-side connection. This process may involve reading the message from the client-side connection and writing the message to the server-side connection and vice versa. Because the service module 190 uses the original source and destination address and source and destination ports for outgoing packets, the wireless client 110 and server 180 respond as though they are communicating with one another.

Once the user authentication or initial setup state is complete, the communication session may then enter a transaction state as indicated generally at 430. During this state the wireless client 110 may request transmission of particular content, such as email messages or web page elements, as indicated generally by a GET command. The service application forwards this message to the server 180 by reading the message from the client-side connection and writing the message to the server-side connection. The service application then knows that the data received from the server 180 in response to the GET command will correspond to the requested data. The service application may then buffer the requested data received from the server 180. Furthermore, because the server-side connection is a separate connection, the operating system and networking stack of the service module 190 sends acknowledgement messages back to the server 180 in response to each received packet so that the server 180 will continue to send data corresponding to the requested data. Once the requested data has been received (as indicated, for example, by receipt of the specified number of bytes set forth in the initial data packet), the service application may then perform application-specific processing of the data, such as email compression, reformatting requested files, or reordering the sequence of received web page elements to optimize performance experienced by the user. The processed data may then be sent to the wireless client 110 by writing the data to the client-side connection. Because the client-side connection is also a separate connection, the operating system and networking stack of the service module 190 suppresses acknowledgement packet received from the wireless client 110 and retransmits lost packets without notifying the server 180.

After the transaction state is complete, the communication session may then enter a close state (as indicated generally at 450) that closes the connection between the wireless client 110 and the server 180. During the close state, the operating system and networking stack of the service module 190 responds to messages received by the wireless client 110 in order to close the server-side connection. The operating system and networking stack then notifies the service application that the server-side connection has been closed, and the service application responds by initiating closure of the client-side connection. The operating system and networking stack of the service module 190 then engages in conventional closure handshakes with the wireless client in order to close the client-side connection as indicated generally at 455.

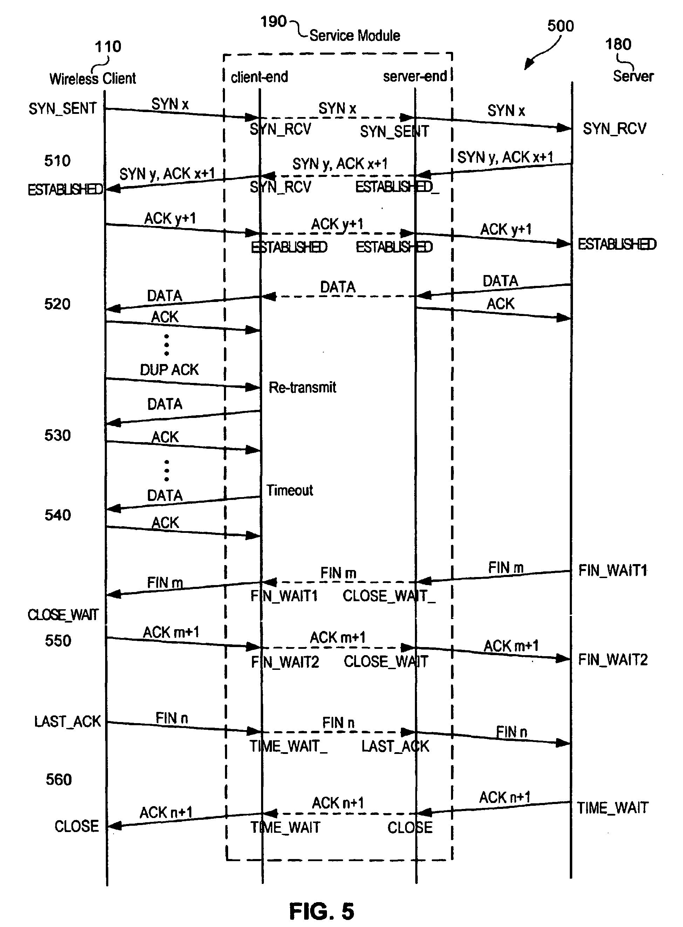

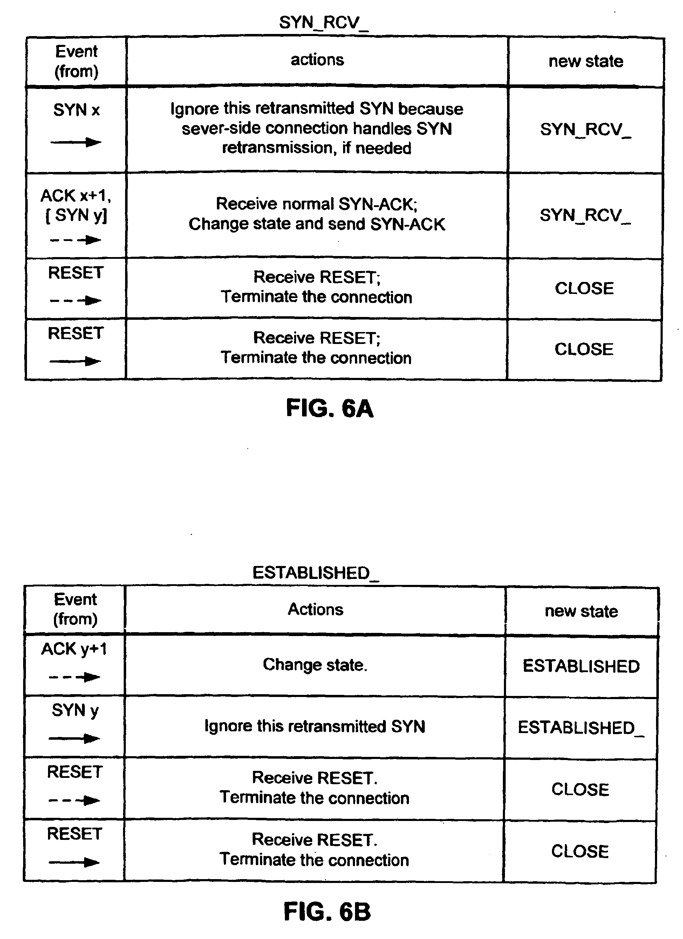

Referring to Figure 5, a signal flow diagram showing exemplary signals passed between a wireless client, service module and server in a transparent mode of operation is illustrated generally at 500. The wireless client 110 may initiate the communication session with the server 180 by sending a SYN x packet as generally indicated at 510. In contrast to the terminated mode, the service module 190 does not respond with the typical three way handshake, and instead performs an in-line connection establishment procedure in order to maintain end-to-end semantics. In order to accomplish this objective, the operating system and network stack of the service module 190 defines two new states in addition to the states defined by conventional TCP architectures for performing connection establishment. These new states are SYN_RCV_ and ESTABLISHED_. The SYN_RCV_ state indicates that the client-end connection has received a SYN packet from the wireless client 110, has passed the packet to its peer server-end connection, and is waiting for a response. Notably the SYN_RCV_ state does not generate the typical SYN+ACK response. Figure 6A illustrates the events, actions and state transitions for the SYN_RCV_ state, where the solid arrows denote a packet received from the host and the dashed arrows denotes a packet received from the peer-end connection. The ESTABLISHED_ state essentially disables the sending a SYN+ACK. Figure 6b illustrates the events, actions and state transitions for ESTABLISHED state.

Once the communication session enters the ESTABLISHED state, the server 180 may begin transmitting data packets to the wireless client 110. In this context, the service module 190 intercepts the data packets and redirects the data packets through the server-end connection to the bridge module. The bridge module will then forward the data packets to the peer client-end connection, and the TCP layer associated with the server-end connection transmits an acknowledgment signal back to the server 180. The client-end connection will then transmit the packet to the wireless client 110 and wait for an acknowledgement signal. Subsequent data packets may be handled in a similar manner such that data packets are passed between the peer-end connections, and each peer-end connection either sends an acknowledgment signal back to the source or waits for an acknowledgement signal from the destination.

Because the client-end connection and server-end connection are treated by the TCP layer of the service module 190 as separate connections, errors in transmission may be addressed by the service module 190 without notifying the original source. For example, if a data packet intended for the wireless client 110 gets lost in transit, the wireless client 110 will transmit a duplicate acknowledgement signal indicating that a packet in the sequence was not received as indicated generally at 530. Upon receipt of this duplicate acknowledgement signal by the client-end connection, the service module 190 may respond by re-transmitting the lost packet. Similarly, if the client-end connection transmits a data packet and does not receive an acknowledgement signal before a timeout occurs (as indicated generally at 540), the client-end connection may handle this event by re-transmitting the presumably lost packet without notifying the server 180. This aspect of the present invention offers significant advantages in wireless or other bandwidth constrained networks, where these types of random error occur with relatively high frequency.

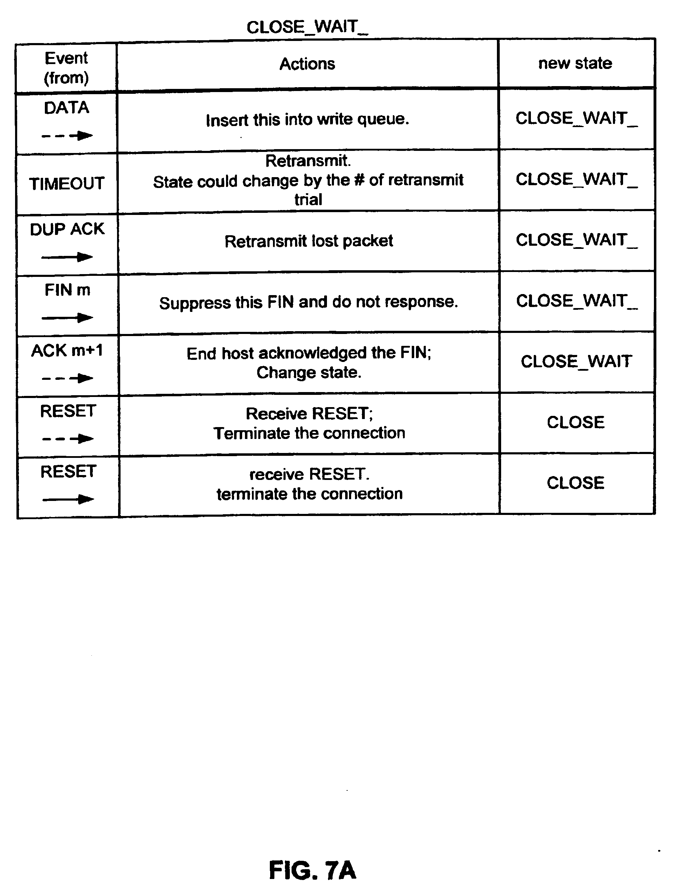

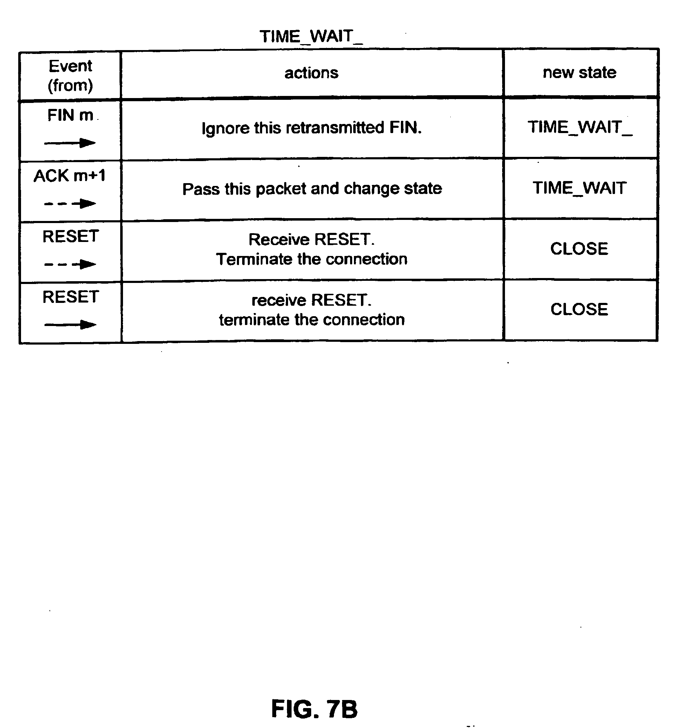

Once the communication session has completed the transmission of the data, either host may initiate connection termination as indicated generally at 500. As with the connection establishment process discussed above, connection termination may utilize an in-line procedure. In order to accomplish this objective, the operating system and network stack of the service module 190 defines two new states in addition to the states defined by conventional TCP architectures for performing connection termination. These new states are CLOSE_WAIT_ and TIME_WAIT_. The TIME_WAIT_state indicates that the server-end connection has received a FIN packet from the server 180, has passed the packet to its peer client-end connection, and is waiting for a response from the client-end connection. Notably, the CLOSE_WAIT_ state does not generate the typical FIN+ACK response until it receives a FIN-ACK. Figure 7A illustrates the events, actions and state transitions for the CLOSE_WAIT_ state, where the solid arrows denote a packet received from the host and the dashed arrows denotes a packet received from the peer-end connection. The TIME_WAIT_ state essentially disables the sending a FIN+ACK. Figure 7B illustrates the events, actions and state transitions for TIME_WAIT_ state.

While the present invention has been described with reference to exemplary embodiments, it will be readily apparent to those skilled in the art that the invention is not limited to the disclosed or illustrated embodiments but, on the contrary, is intended to cover numerous other modifications, substitutions, variations and broad equivalent arrangements that are included within the scope of the following claims.

## Claims

1. A method for providing a dual mode service platform within a network communication system including a client (110), a server (180) and a network (125, 170) linking the client and the server, the method comprising:
providing a service module (190) in the network, the service module being located separately from but coupled to the client and the server through the network, the service module including a processor (220), an operating system (260), a memory system (240), and a service application (250);
the service module intercepting packets communicated between a client and a server;
the service module determining from the packets whether a connection between the client and the server matches a predetermined service criteria;
if so, the service module breaking the connection between the client and the server to form a first connection between the client and the service application and a second connection between the service application and the server in order to process the packets associated with the connection in accordance with a first mode including application-specific manipulation of the data stream formed by said packets;
otherwise, the service module regulating transmission of packets communicated between the client and the server in order to process the packets in accordance with a second mode wherein the second mode enhances end-to-end performance of the connection between the client and the server without breaking end-to-end semantics, and wherein the second mode does not involve application-specific manipulation of the data stream;
the service module generating outgoing packets that include source and destination addresses and source and destination ports associated with the client and the server, whereby the operating system and the networking stack of the client processes receive packets as though they came directly from the other respective party and are unaware that the packets have been intercepted, thereby avoiding the requirement to modify the physical layers, operating system and networking stacks of the client and server.

2. The method of claim 1, wherein the step of determining comprising classifying the packets in accordance with a plurality of classification rules.

3. The method of claim 2, wherein the classification rules comprise a plurality of masks, and wherein the step of classifying comprises applying the plurality of masks to a packet header associated with the packets.

4. The method of claim 1, wherein the step of breaking comprises:
terminating the connection between the client and the server at the service application to form the first connection; and
opening a separate connection between the service application and the server to form the second connection.

5. The method of claim 4, wherein the step of opening is performed by the service application associated with the predetermined service criteria.

6. The method of claim 1, wherein the step of breaking comprises generating control block parameters for the first connection and for the second connection.

7. The method of claim 1, wherein said application-specific manipulation comprises compressing at least a portion of the data associated with the data packets.

8. The method of claim 1, wherein said application-specific manipulation comprises transcoding at least a portion of the data associated with the data packets.

9. The method of claim 1, further comprising transmitting processed data packets to the client using a transmission timer.

10. The method of claim 1, including:
buffering data packets;
sending acknowledgements back to the server so that the source continues to send data and then performing the application-specific manipulation of the buffered data; and
suppressing acknowledgements received from the client without notifying the server.

11. Service module (190) comprising means arranged to carry out every one of the method steps defined in one of the preceding claims.

## Patentansprüche

1. Verfahren zum Bereitstellen einer Serviceplattform für Zweifachbetrieb innerhalb eines Netzwerkkommunikationssystems, welches einen Client (110), einen Server (130) und ein Netzwerk (125, 170) enthält, das den Client und den Server miteinander verbindet, wobei das Verfahren aufweist:
Bereitstellen eines Servicemoduls (190) in dem Netzwerk, wobei das Servicemodul von dem Client und dem Server getrennt angeordnet, jedoch durch das Netzwerk mit diesen verbunden ist, und wobei das Servicemodul einen Prozessor (220), ein Betriebssystem (260), ein Speichersystem (240) und eine Dienstanwendung (250) enthält,
Abfangen von Paketen, die in der Kommunikation zwischen einem Client und einem Server übermittelt werden, durch das Servicemodul,
Bestimmen anhand der Pakete durch das Servicemodul, ob eine Verbindung zwischen dem Client und dem Server vorbestimmte Dienstkriterien erfüllt,
wenn dies der Fall ist, Unterbrechen der Verbindung zwischen dem Client und dem Servier durch das Servicemodul, um eine erste Verbindung zwischen dem Client und der Dienstanwendung und eine zweite Verbindung zwischen der Dienstanwendung und dem Server herzustellen, um die Pakete, die mit der Verbindung verknüpft sind, entsprechend einer ersten Betriebsart, einschließlich einer anwendungsspezifischen Bearbeitung bzw. Handhabung des Datenstroms zu verarbeiten, der durch die Pakete gebildet wird,
ansonsten Einstellen bzw. Regulieren der Übermittlung von Paketen, welche zwischen dem Client und dem Server kommuniziert werden, durch das Servicemodul, um die Pakete entsprechend einer zweiten Betriebsart zu verarbeiten, wobei die zweite Betriebsart die effektive Leistungsfähigkeit der Gesamtverbindung zwischen Client und Server verbessert, ohne die Semantik von einem Ende zum anderen Ende zu unterbrechen, und wobei die zweite Betriebsart keine anwendungsspezifische Manipulation des Datenstroms umfaßt,
wobei das Servicemodul ausgehende Pakete erzeugt, die Quell- und Zieladressen und Quell- und Zielanschlüsse umfassen, welche zu dem Client und dem Server gehören, wodurch das Betriebssystem und der Netzwerkspeicher bzw. Netzwerkstapelspeicher oder Clientprozessor Pakete so empfangen, als kämen sie direkt von dem jeweils anderen Teilnehmer und ohne zu bemerken daß die Pakete abgefangen wurden, wodurch das Erfordernis vermieden wird, die physikalischen Ebenen bzw. Schichten, das Betriebssystem und die Netzwerkspeicher bzw. Stapelspeicher von Client und Server zu modifizieren.

2. Verfahren nach Anspruch 1, wobei der Schritt des Bestimmens das Klassifizieren der Pakete entsprechend einer Mehrzahl von Klassifikationsregeln aufweist.

3. Verfahren nach Anspruch 2, wobei die Klassifikationsregeln eine Mehrzahl von Masken aufweisen und wobei der Schritt der Klassifizierung das Anwenden einer Mehrzahl von Masken auf eine Paketkopfzeile (header) aufweist, welche zu den Paketen gehört.

4. Verfahren nach Anspruch 1, wobei der Schritt des Unterbrechens aufweist:
Beenden der Verbindung zwischen dem Client und dem Server bei der Dienstanwendung, um die erste Verbindung zu bilden, und
Öffnen einer getrennten Verbindung zwischen der Dienstanwendung und dem Server, um die zweite Verbindung zu bilden.

5. Verfahren nach Anspruch 4, wobei der Schritt des Öffnens ausgeführt wird durch die Dienstanwendung, welche den vorbestimmten Dienstkriterien zugeordnet ist.

6. Verfahren nach Anspruch 5, wobei der Schritt des Unterbrechens das Erzeugen von Steuerblockparametern für die erste Verbindung und die zweite Verbindung aufweist.

7. Verfahren nach Anspruch 1, wobei die anwendungsspezifische Bearbeitung weiterhin das Komprimieren mindestens eines Teils der Daten aufweist, die zu den Datenpaketen gehören.

8. Verfahren nach Anspruch 1, wobei die anwendungsspezifische Bearbeitung weiterhin das Umcodieren zumindest eines Teils der zu den Datenpaketen gehörigen Daten aufweist.

9. Verfahren nach Anspruch 1, welches weiterhin das Senden verarbeiteter Datenpakete an den Client unter Verwendung eines Übermittlungszeitgebers aufweist.

10. Verfahren nach Anspruch 1, welches aufweist:
Puffern von Datenpaketen,
Senden von Bestätigungen zurück an den Server, so daß die Quelle weiterhin Daten sendet und dann Durchführen der anwendungsspezifischen Manipulation der gepufferten Daten, und
Unterdrücken von Bestätigungen, die von dem Client empfangen wurden, ohne den Server zu benachrichtigen.

11. Servicemodul (190), welches Einrichtungen aufweist, die dafür ausgelegt sind, jeden der Verfahrensschritte auszuführen, die in einem der vorstehenden Ansprüche definiert sind.

## Revendications

1. Procédé pour procurer une plate-forme de service de mode double dans un système de communication par réseau comprenant un client (110), un serveur (180) et un réseau (125, 170) reliant le client et le serveur, le procédé comprenant :
l'établissement d'un module de service (190) dans le réseau, le module de service étant placé séparément du client et du serveur mais couplé à ceux-ci par l'intermédiaire du réseau, le module de service comprenant un processeur (220), un système d'exploitation (260), un système de mémoire (240) et une application de service (250) ;
le module de service interceptant des paquets communiqués entre un client et un serveur ;
le module de service déterminant d'après les paquets si une connexion entre le client et le serveur correspond à un critère de service prédéterminé ;
s'il en est ainsi, le module de service rompant la connexion entre le client et le serveur pour former une première connexion entre le client et l'application de service, et une seconde connexion entre l'application de service et le serveur afin de traiter les paquets associés à la connexion conformément à un premier mode comprenant une manipulation spécifique à l'application du train de données formé par lesdits paquets ;
autrement, le module de service régulant la transmission de paquets communiqués entre le client et le serveur afin de traiter les paquets conformément à un second mode dans lequel le second mode renforce une performance bout-à-bout de la connexion entre le client et le serveur sans rompre la sémantique bout-à-bout, et dans lequel le second mode n'implique pas une manipulation spécifique à l'application du train de données ;
le module de service générant des paquets sortants qui comprennent des adresses de source et de destination et des ports de source et de destination associés aux clients et au serveur, grâce à quoi le système d'exploitation et l'empilage de mise en réseau des processus du client reçoivent des paquets comme s'ils venaient directement de l'autre partie respective et ne savent pas que les paquets ont été interceptés, évitant ainsi la nécessité de modifier les couches physiques, le système d'exploitation et les empilages de mise en réseau du client et du serveur.

2. Procédé selon la revendication 1, dans lequel l'étape de détermination comprend le classement des paquets conformément à plusieurs règles de classement.

3. Procédé selon la revendication 2, dans lequel les règles de classement comprennent les multiples masques, et dans lequel l'étape de classement comprend l'application des multiples masques à un en-tête de paquet associée aux paquets.

4. Procédé selon la revendication 1, dans lequel l'étape de rupture comprend :
la terminaison de la connexion entre le client et le serveur à l'application de service pour former la première connexion ; et
l'ouverture d'une connexion séparée entre l'application de service et le serveur pour former la seconde connexion.

5. Procédé selon la revendication 4, dans lequel l'étape d'ouverture est effectuée par l'application de service associée au critère de service prédéterminé.

6. Procédé selon la revendication 1, dans lequel l'étape de rupture comprend la génération de paramètres de bloc de commande pour la première connexion et pour la seconde connexion.

7. Procédé selon la revendication 1, dans lequel ladite manipulation spécifique à l'application comprend la compression d'au moins une partie des données associées aux paquets de données.

8. Procédé selon la revendication 1, dans lequel ladite manipulation spécifique à l'application comprend le transcodage d'au moins une partie des données associées aux paquets de données.

9. Procédé selon la revendication 1, comprenant en outre la transmission de paquets de données traitées au client en utilisant une horloge de transmission.

10. Procédé selon la revendication 1, comprenant :
la mise en tampon de paquets de données ;
le renvoi d'accusés de réception au serveur afin que la source continue d'envoyer des données, puis l'exécution de la manipulation spécifique à l'application des données tamponnées ; et
la suppression des accusés de réception reçus du client sans notifier le serveur.

11. Module de service (190) comportant des moyens agencés pour exécuter l'une quelconque des étapes du procédé définies dans l'une des revendications précédentes.
